# EUROPÄISCHE PATENTSCHRIFT

(11) **EP 0 853 886 B1**
(45) Veröffentlichungstag und Bekanntmachung des Hinweises auf die Patenterteilung: **16.04.2003**
(21) Anmeldenummer: 98100208.2
(22) Anmeldetag: 08.01.1998
(51) Int. Cl.: A23B 7/08, A23B 7/157, A23B 7/152

(54) **Verfahren zur Herstellung von bissfesten Früchten**
Method for the preparation of solid bite fruits
Procédé de préparation de fruits à texture croquante

(30) Priorität: 15.01.1997 DE 19700820; 07.10.1997 DE 19744125
(43) Veröffentlichungstag der Anmeldung: 22.07.1998
(73) Patentinhaber: Döhler GmbH, 64295 Darmstadt (DE)
(72) Erfinder: Füsser, Hans, Dr., 70794 Filderstadt (DE); Maier, Oliver, Dipl.-LM-Ing., 71543 Wüstenrot (DE); Carle, Reinhold, Prof. Dr., 72675 Altenriet (DE)
(74) Vertreter: Werner, Hans-Karsten, Dr.Dipl.-Chem.

(56) Entgegenhaltungen:
- US-A- 4 350 711
- US-A- 5 576 046
- PONTING J D ET AL: "Pre-freezing processing of Golden Delicious apple slices." JOURNAL OF FOOD SCIENCE, Bd. 37, Nr. 6, 1972, USDA, W. REGIONAL RES. LAB., BERKELEY, CALIFORNIA 94710, USA, Seiten 812-814, XP002081337
- PATENT ABSTRACTS OF JAPAN vol. 009, no. 078 (C-274), 6.April 1985 & JP 59 210863 A (YAKULT HONSHA KK), 29.November 1984,
- PATENT ABSTRACTS OF JAPAN vol. 097, no. 003, 31.März 1997 & JP 08 308490 A (KOEI KAGAKU KOGYO KK), 26.November 1996,
- DATABASE WPI Week 9429 Derwent Publications Ltd., London, GB; AN 94-239558 XP002081338 & PT 101 191 A (KIWI SOL LTDA) , 29.Juli 1994
- B. HOLLAND: "The Composition of Foods 5th edition", 1992, THE ROYAL SOCIETY OF CHEMISTRY, CAMBRIDGE, GB

## Beschreibung

Die vorliegende Erfindung betrifft ein Verfahren zur Herstellung von bißfesten Früchten.

Verbraucher und Industrie erwarten, daß Früchte und Früchteprodukte ganzjährig zur Verfügung stehen. Zu diesem Zweck sind eine Vielzahl von Haltbarmachungsverfahren entwickelt worden, wobei die gängigsten Verfahren die chemische Konservierung z.B. mit Schwefeldioxid, Benzoesäure oder Sorbinsäure und thermische Verfahren wie das Tiefgefrieren und die Pasteurisation sind. Diese sind beispielsweise in Woodroof, J.G. & Luh, B.S., 1986, Commercial Fruit Processing, The AVI Publishing Company, Inc., Westport, ISBN: 0-87055-502-2 beschrieben.

Bei der Verarbeitung von frischen Früchten zu haltbargemachten Produkten werden diese nach dem Sortieren und Waschen entweder zur Lagerung eingefroren oder es erfolgt eine sofortige Weiterverarbeitung der Früchte unter Verwendung eines Erhitzungsschrittes.

Bei der Herstellung von Obstkonserven beispielsweise werden vorzugsweise frische Früchte unter Zusatz weiterer Komponenten in Verkaufsbehältnisse gefüllt, verschlossen und anschließend in einem Autoklaven pasteurisiert.

Bei der Herstellung von Fruchtzubereitungen und Konfitüren werden diese mit weiteren Komponenten vermischt, erhitzt und heiß oder rückgekühlt und kaltaseptisch in Verkaufsbehältnisse abgefüllt.

Bei diesen Herstellungsverfahren erfahren die Früchte oder Fruchtstücke einen starken Texturverlust (vgl. DIN 10950, 1973: Begriffsbestimmung der sinnlichen Erfassung der Textur). Im einzelnen kommt es dabei zu einer erheblichen Verschlechtung der kinästhetischen Eigenschaften (Knackigkeit, Bißfestigkeit), der visuellen Merkmale (Form, Oberflächenbeschaffenheit) und der haptischen Merkmale (statisch empfundene Festigkeit, Turgeszenz). Diese weichen erheblich von denen frischer Früchte ab und werden vom Verbraucher als nachteilig beurteilt.

Der Texturverlust ergibt sich durch eine Desintegration des Gewebes der Früchte durch die Verarbeitung. Verfahren zur Verfestigung von Obst sind bekannt.

J.D. Ponting und R. Jackson in "Pre-Freezing Processing of Golden Delicious Apple Slices", Journal of Food Science, 37 (1972), Seiten 812 - 814 beschreiben die Vorbehandlung von Golden Delicious-Apfelstücken mit verschiedenen Mitteln wie Ascorbinsäure, Schwefeldioxid, Calciumchlorid und verschiedenen Zuckern bei Raumtemperatur, wobei brauchbare Ergebnisse nur erzielt wurden bei der gleichzeitigen Behandlung mit Lösungen enthaltend Zucker, SO₂ und/oder Ascorbinsäure und geringen Zusätzen von Calciumchlorid, da Mengen von mehr als 0,5 % Calciumchlorid den Geschmack verschlechtert haben.

LaBelle, R.L. beschreibt in "Heat and Calcium Treatments for firming Red Tart Cherries in a Hot-Fill Process", Journal of Food Science 26, (1971), 332 - 326 einen Prozeß zur Verfestigung von Kirschen. Entsteinte Kirschen werden hierbei bei 60°C in einer Calciumlösung 5 bis 20 Minuten vorerhitzt und heiß abgefüllt. Die Calciumlösung enthält dabei bis zu 0,5 Gew.-% Calciumchlorid.

Van Buren, J.P. beschreibt in "Heat Treatments and the Texture and Pectins of Red Tart Cherries", Journal of Food Science 39 (1974), 1203 - 1205 ein Verfahren, bei dem nicht entsteinte Kirschen unter Verwendung einer calciumhaltigen Aufgußlösung unter Vorerhitzung auf 50 bis 70°C, anschließende Rückkühlung auf 43°C für 30 Minuten, gefolgt von einer 10 minütigen Pasteurisation bei 93°C, verfestigt werden.

Die beschriebenen Methoden ergeben verfestigte Früchte, die jedoch weit ab von der Textur frischer Ware liegen.

Aufgabe der vorliegenden Erfindung ist es, ein Verfahren anzugeben, mit dem bißfeste Früchte oder Fruchtstücke so verfestigt werden, daß ihre Textur weitgehend der Textur frischer Früchte entspricht und diese Textur auch während weiterer Verarbeitungsschritte erhalten bleibt.

Die Aufgabe wird gelöst durch ein Verfahren mit den Merkmalen des Patentanspruchs 1. Die weiteren Patentansprüche stellen bevorzugte Ausführungsformen des erfindungsgemäßen Verfahrens dar.

Erfindungsgemäß werden frischgeerntete oder tiefgekühlte Früchte oder Fruchtstücke mit einem wäßrigen System benetzt, das mindestens soviel Zucker und soviel Calciumionen wie die flüssige Phase der Früchte enthält und in dieser benetzten Form mindestens zwei Tagen bei Temperaturen oberhalb des Gefrierpunktes des wäßrigen Systems und unter 10°C gelagert werden.

Überraschenderweise wird während dieser Kältebehandlung eine Fixierung und Verfestigung der Textur der Früchte beobachtet.

In bevorzugter Weise findet die Lagerung für eine Dauer von vier bis zehn Tagen statt. Die Temperatur während der Lagerung beträgt bevorzugt 2 bis 6°C. Durch diese Maßnahme wird insbesondere das Fruchtfleisch der Früchte verfestigt, so daß diese auch nach einer Weiterbehandlung eine deutlich verbesserte Bißfestigkeit aufweisen.

Die verwendeten Calciumionen werden bevorzugt als Calciumsalze von Fruchtsäuren in das wäßrige System eingebracht, wobei als Fruchtsäuren bevorzugt Zitronensäure, Ascorbinsäure, Weinsäure oder Äpfelsäure verwendet werden.

Durch die Verwendung der Calciumsalze von Fruchtsäuren werden gegenüber der Verwendung anorganischer Calciumsalze, wie beispielsweise Calciumchlorid, der Geschmack, das Farbhaltevermögen und die Oberflächenbeschaffenheit der Früchte verbessert.

Die Calciumionen können in einer Konzentration von bis zu 0,15 Mol/l enthalten sein.

Als Zucker werden insbesondere Glucose, Fructose oder Saccharose oder Mischungen verwendet. Es können aber auch andere lebensmittelrechtlich zulässige Zucker wie Laktose, Mannose, Maltose, Xylose, Palatinose etc. eingesetzt werden.

Während eine Benetzung der Früchte mit dem wäßrigen System ausreicht, wird bevorzugt so viel wäßriges System verwendet, daß die Früchte und das wäßrige System eine Suspension bilden. Suspension heißt in diesem Zusammenhang, daß mindestens die Zwischenräume zwischen den Früchten komplett durch das wäßrige System gefüllt sind. Bevorzugt wird dabei, daß die Dichte des wäßrigen Systems gleich oder geringfügig niedriger ist als die Dichte der Früchte, so daß die Früchte einen Auftrieb erfahren und gegenseitig wenig Druck aufeinander ausüben.

Dem wäßrigen System können weitere Substanzen zugesetzt werden wie z.B. Konservierungsstoffe und Antioxidantien, die dem Haltbarmachen der Produkte dienen oder Hydroxyzimtsäure-Derivate, Hydroxyzimtsäure-Derivate enthaltende Pflanzenextrakte, Peroxidase Präparate, Peroxidase enthaltende Pflanzenextrakte, Substrate der Peroxidase, Pektinesterasen oder Pektinesterase enthaltende Extrakte aus Pflanzen, die zur einer weiteren Erhöhung der Bißfestigkeit der Früchte beitragen können.

Vorteilhaft liegt der pH-Wert des wäßrigen Systems bei oder unterhalb von 4,5.

In einigen Ausführungsformen des erfindungsgemäßen Verfahrens kann es vorteilhaft sein, die Zusammensetzung des wäßrigen Systems während der Lagerung zu verändern, beispielsweise durch den Zusatz weiterer Stoffe oder Änderungen der Konzentrationen der Inhaltsstoffe.

Als Früchte für das erfindungsgemäße Verfahren werden insbesondere Sauerkirschen, Süßkirschen, Trauben, Pfirsiche, Äpfel, Birnen, Pflaumen, Aprikosen, Stachelbeeren, Erdbeeren, Himbeeren, Johannisbeeren und Brombeeren eingesetzt.

Vorteilhafterweise weisen Fruchtstücke eine Größe von 4 bis 15 mm auf, noch mehr bevorzugt eine Größe von 6 bis 12 mm und am stärksten bevorzugt eine Größe von 8 bis 10 mm. Gewünschtenfalls werden die Früchte auf diese Größenordnung zerschnitten.

An die vorgenannten Verfahrensschritte, auf die im weiteren als Kühllagerung Bezug genommen wird, können sich weitere Schritte anschließen.

Je nach weiterer Verwendung können die Früchte in einem Folgeschritt vom wäßrigen System abgetrennt und direkt weiterverarbeitet werden oder einer Wärmebehandlung unterzogen werden, in der die Früchte in einem wäßrigen System für 5 bis 80 Minuten auf 45 bis 72°C erwärmt werden. Dabei kann sowohl das gleiche wäßrige System verwendet werden, das während der Kühllagerung verwendet wurde oder ein andersartiges wäßriges System eingesetzt werden. Dies ist insbesondere dann vorteilhaft, wenn die Zusammensetzung des wäßrigen Systems während der Wärmebehandlung sich von der Zusammensetzung des wäßrigen Systems während der Kühllagerung unterscheiden soll. Zusätzlich kann es vorteilhaft sein, wenn in dem Behälter für die Kühllagerung und/oder die Wärmebehandlung Unterdruck erzeugt wird oder in dem Behälter für die Kühllagerung und/oder die Wärmebehandlung ein Inertgas zugeführt wird.

Die Temperatur während der Wärmebehandlung beträgt vorzugsweise 55 bis 67°C und besonders bevorzugt 58 bis 62°C.

Die erfindungsgemäß hergestellten, bißfesten Früchte eignen sich insbesondere zur Herstellung von Obstkonserven, Fruchtzubereitungen, Konfitüren und Belegfrüchten.

Das erfindungsgemäße Verfahren soll durch die folgenden Beispiele erläutert werden:

### Beispiel 1

Erntefrische Süßkirschen (Sorte Cordia) mit einem Trockensubstanzgehalt von 16,82 ± 2,72° Brix mit einem pH-Wert von 4,0 werden ausgelesen, entstielt und unter fließendem, kalten Wasser gereinigt. 90 g Kirschen werden in 200 ml Konservengläser mit 99 g einer Lösung versetzt, die 3,6 g/l Calciummalat, 3,5 g/l Äpfelsäure und 130 g/l Saccharose enthält. Unter Dampfinjektion werden die Konservengläser mit Twist-Off-Schraubdeckeln verschlossen und für eine Woche bei 0°C eingelagert. Nach dem Lagern werden die Kirschen in den Konservengläsern in einem Rotationsautoklaven des Typs Pilot-Rotor 900 (Firma Stock) für 45 Minuten bei 58°C Kerntemperatur erhitzt und danach sofort pasteurisiert. Anschließend werden die Konserven auf 20°C temperiert und der Aufguß von den Kirschen abgetrennt.

### Vergleichsbeispiel 1

Die Kirschen werden wie unter Beispiel 1 beschrieben vorbereitet, jedoch ohne den Zusatz an Calciummalat und Äpfelsäure in die Konservengläser eingefüllt und ohne Kühllagerung oder Wärmebehandlung pasteurisiert. Anschließend wird die Konserve auf 20°C temperiert und die Kirschen vom wäßrigen System abgetrennt.

### Vergleich der Bißfestigkeit der Kirschen

Die Kirschen werden mit einem Skalpell halbiert und mit der den Stein enthaltenden Hälfte jeder Kirsche ein Penetrationstest durchgeführt. Dazu wird die Kirsche in einer Vorrichtung fixiert und mit einem zylindrischen Stempel von 4 mm Durchmesser und einer Geschwindigkeit von 400 mm/min so durchstoßen, daß der Stein nicht berührt wird. Gemessen wird dabei die Abhängigkeit der Kraft vom Weg.

| Beispiel | Maximale Kraft Fmax [N] | Energie bis Fmax [mJ] |
|---|---|---|
| Beispiel 1 | 3,40 | 7,12 |
| Vergleichsbeispiel 1 | 1,75 | 2,63 |

Die Tabelle gibt die gemessenen Größen als Mittelwert von zehn Einzelbestimmungen wieder. Es zeigt sich, daß durch das erfindungsgemäße Verfahren fast doppelt so hohe Festigkeiten erreicht werden wie bei konventionellen Verfahren zur Herstellung von Kirschkonserven.

### Beispiel 2

Entsteint und tiefgefrorene Sauerkirschen mit einem Trockensubstanzgehalt von 20° Brix und einen pH-Wert von 3,3 werden gefroren in 200 ml Konservengläser mit Twist-Off-Schraubdeckeln abgefüllt und mit einem wäßrigen System wie in Beispiel 1 befüllt. Die weitere Kühllagerung, Wärmebehandlung und Pasteurisation erfolgten wie unter Beispiel 1 beschrieben.

### Vergleichsbeispiel 2

Kirschen der gleichen Charge werden lediglich aufgetaut.

### Vergleich der Scherfestigkeit

Die Kirschen werden einem Scherversuch in einer Kramer Scherzelle unterzogen. Es wird die spezifische Maximalkraft Fmax/100 g als charakteristische Größe für die Festigkeit bestimmt.

| Beispiel | Spezifische Maximalkraft Fmax spez [N/100 g] |
|---|---|
| Beispiel 2 | 3754,5 |
| Vergleichsbeispiel 2 | 1233,6 |

Das erfindungsgemäße Verfahren erhöht somit die Festigkeit einer tiefgekühlten und wieder aufgetauten Frucht um mehr als das dreifache.

### Beispiel 3

Weiße, kernlose Weintrauben (Trockensubstanz 16° Brix pH-Wert 4,0) werden gewaschen, entstielt und anschließend in 200 ml Konservengläsern mit Twist-Off-Schraubdeckel abgefüllt, mit einem wäßrigen System gemäß Beispiel 1 befüllt und für eine Woche bei 0°C gelagert. Die so behandelten Weintrauben werden anschließend pasteurisiert und das wäßrige System von den Trauben abgetrennt.

### Vergleichsbeispiel 3

Weintrauben werden wie unter Beispiel 3 jedoch ohne Kühllagerung mit calciumhaltigem wäßrigen System behandelt.

### Vergleich der Bißfestiqkeit

Der Vergleich mit Weintrauben des Beispiels 3 und des Vergleichsbeispiels 3 werden durch Penetrationstests durchgeführt wie in Beispiel 1 beschrieben. Die Ergebnisse der Mittelwerte von zehn Einzelbestimmungen ergeben sich aus der folgenden Tabelle.

| Beispiel | Maximale Kraft [N] Fmax | Energie bis Fmax [mJ] |
|---|---|---|
| Beispiel 3 | 5,150 | 11,333 |
| Vergleichsbeispiel 3 | 2,476 | 5,124 |

Durch die Anwendung der Kühllagerung bei der Herstellung von Weintraubenkonservern werden doppelt so hohe Festigkeiten erreicht wie bei Weintrauben, die ohne Kühllagerung verarbeitet werden.

## Patentansprüche

1. Verfahren zur Herstellung von bißfesten Früchten, **dadurch gekennzeichnet, daß** frischgeerntete oder tiefgekühlte Früchte oder Fruchtstücke mit einem wäßrigen System benetzt werden, welches mindestens so viel Zucker und so viel Calciumionen wie die flüssige Phase der Früchte enthält und in dieser Form mindestens zwei Tage bei Temperaturen oberhalb des Gefrierpunktes des wäßrigen Systems und unter 10°C gelagert werden.

2. Verfahren nach Anspruch 1, **dadurch gekennzeichnet, daß** die Dauer der Lagerung 4 bis 14 Tage beträgt.

3. Verfahren nach Anspruch 1 und/oder 2, **dadurch gekennzeichnet, daß** die Lagerung bei einer Temperatur von 2 bis 6°C erfolgt.

4. Verfahren nach mindestens einem der Ansprüche 1 bis 3, **dadurch gekennzeichnet, daß** die Calciumionen als Calciumsalze von Fruchtsäuren in das wäßrige System eingebracht werden.

5. Verfahren nach Anspruch 4, **dadurch gekennzeichnet, daß** als Fruchtsäure Zitronensäure, Ascorbinsäure, Weinsäure, Äpfelsäure oder Gemische derselben eingesetzt werden.

6. Verfahren nach mindestens einem der Ansprüche 1 bis 4, **dadurch gekennzeichnet, daß** das wäßrige System Calciumionen in einer Konzentration von bis zu 0,15 Mol/l enthält.

7. Verfahren nach mindestens einem der Ansprüche 1 bis 6, **dadurch gekennzeichnet, daß** als Zucker Glucose, Fructose, Saccharose oder Mischungen derselben eingesetzt wird.

8. Verfahren nach mindestens einem der Ansprüche 1 bis 7, **dadurch gekennzeichnet, daß** die Früchte und das wäßrige System eine Suspension bilden.

9. Verfahren nach Anspruch 8, **dadurch gekennzeichnet, daß** die Dichte des wäßrigen Systems gleich oder niedriger ist als die Dichte der Früchte.

10. Verfahren nach mindestens einem der Ansprüche 1 bis 9, **dadurch gekennzeichnet, daß** dem wäßrigen System zusätzlich Konservierungsstoffe, Antioxidantien, Fruchtsäuren, Hydroxyzimtsäure-Derivate, Hydroxyzimtsäure-Derivate enthaltende Pflanzenextrakte, Peroxidase-Präparate, Peroxidase enthaltende Pflanzenextrakte, Substrate der Peroxidase, Pektinesterasen und/oder Pektinesterase enthaltende Extrakte aus Pflanzen zugesetzt werden.

11. Verfahren nach mindestens einem der Ansprüche 1 bis 10, **dadurch gekennzeichnet, daß** der pH des wäßrigen Systems kleiner oder gleich 4,5 ist.

12. Verfahren nach mindestens einem der Ansprüche 1 bis 10, **dadurch gekennzeichnet, daß** die Zusammensetzung des wäßrigen Systems während der Kühllagerung geändert wird.

13. Verfahren nach mindestens einem der Ansprüche 1 bis 12, **dadurch gekennzeichnet, daß** die Früchte ausgewählt werden aus der Gruppe Sauerkirschen, Süßkirschen, Trauben, Pfirsiche, Äpfel, Birnen, Pflaumen, Aprikosen, Stachelbeeren, Erdbeeren, Himbeeren, Johannisbeeren und Brombeeren.

14. Verfahren nach mindestens einem der Ansprüche 1 bis 13, **dadurch gekennzeichnet, daß** die Früchte oder Fruchtstücke eine Größe von 4 bis 15 mm aufweisen.

15. Verfahren nach mindestens einem der Ansprüche 1 bis 14, **dadurch gekennzeichnet, daß** die Früchte anschließend überwiegend vom wäßrigen System abgetrennt werden.

16. Verfahren nach mindestens einem der Ansprüche 1 bis 14, **dadurch gekennzeichnet, daß** die Früchte anschließend in einem wäßrigen System für 5 bis 80 Minuten auf 45 bis 72°C erwärmt werden.

17. Verfahren nach mindestens einem der Ansprüche 1 bis 16, **dadurch gekennzeichnet, daß** das wäßrige System während der Erwärmung dasselbe oder ein anderes wäßriges System ist als das System während der Kühllagerung.

18. Verfahren nach mindestens einem der Ansprüche 1 bis 17, **dadurch gekennzeichnet, daß** in dem Behälter für die Kühllagerung und/oder Wärmebehandlung ein Unterdruck erzeugt wird.

19. Verfahren nach mindestens einem der Ansprüche 1 bis 17, **dadurch gekennzeichnet, daß** in dem Behälter für die Kühllagerung und/oder Wärmebehandlung ein Inertgas zugeführt wird.

20. Verwendung der bißfesten Früchte nach mindestens einem der Ansprüche 1 bis 12 zur Herstellung von Obstkonserven, Fruchtzubereitungen, Konfitüren oder Belegfrüchten.

## Claims

1. A process for the preparation of firm fruit, **characterized in that** freshly harvested or deep-frozen fruit or fruit pieces are wetted with an aqueous system which contains at least as much sugar and as much calcium ions as the liquid phase of said fruit, and stored in this form for at least two days at temperatures of above the freezing point of the aqueous system and below 10 °C.

2. The process according to claim 1, **characterized in that** the duration of said storage is from 4 to 14 days.

3. The process according to claim 1 and/or 2, **characterized in that** said storage is effected at a temperature of from 2 to 6 °C.

4. The process according to at least one of claims 1 to 3, **characterized in that** the calcium ions are introduced into the aqueous system as calcium salts of fruit acids.

5. The process according to claim 4, **characterized in that** citric acid, ascorbic acid, tartaric acid, malic acid or mixtures thereof are employed as said fruit acid.

6. The process according to at least one of claims 1 to 4, **characterized in that** said aqueous system contains calcium ions in a concentration of up to 0.15 mol/l.

7. The process according to at least one of claims 1 to 6, **characterized in that** glucose, fructose, sucrose or mixtures thereof are employed as said sugar.

8. The process according to at least one of claims 1 to 7, **characterized in that** said fruit and said aqueous system form a suspension.

9. The process according to claim 8, **characterized in that** the density of the aqueous system is equal to or lower than the density of the fruit.

10. The process according to at least one of claims 1 to 9, **characterized in that** preservatives, antioxidants, fruit acids, hydroxycinnamic acid derivatives, plant extracts containing hydroxycinnamic acid derivatives, peroxidase preparations, plant extracts containing peroxidase, substrates of peroxidase, pectin esterases and/or extracts from plants containing pectin esterase are additionally added to the aqueous system.

11. The process according to at least one of claims 1 to 10, **characterized in that** the pH of the aqueous system is lower than or equal to 4.5.

12. The process according to at least one of claims 1 to 10, **characterized in that** the composition of the aqueous system is changed during the cool storage.

13. The process according to at least one of claims 1 to 12, **characterized in that** said fruit are selected from the group consisting of sour cherries, sweet cherries, grapes, peaches, apples, pears, plums, apricots, gooseberries, strawberries, raspberries, currants and blackberries.

14. The process according to at least one of claims 1 to 13, **characterized in that** said fruit or fruit pieces have a size of from 4 to 15 mm.

15. The process according to at least one of claims 1 to 14, **characterized in that** said fruit are subsequently separated from the aqueous system to the major part thereof.

16. The process according to at least one of claims 1 to 14, **characterized in that** said fruit are subsequently heated at 45 to 72 °C in an aqueous system for 5 to 80 minutes.

17. The process according to at least one of claims 1 to 16, **characterized in that** said aqueous systems during the heating is the same or is different from said aqueous system during the cool storage.

18. The process according to at least one of claims 1 to 17, **characterized in that** a reduced pressure is generated in the container for said cool storage and/or heat treatment.

19. The process according to at least one of claims 1 to 17, **characterized in that** an inert gas is introduced into the container for said cool storage and/or heat treatment.

20. Use of said firm fruit according to at least one of claims 1 to 12 for preparing preserved (canned) fruit, fruit preparations, jams or (candied) pie fruits.

## Revendications

1. Procédé de préparation de fruits croquants, **caractérisé en ce qu'**on mouille des fruits ou des morceaux de fruits fraîchement récoltés ou surgelés avec un système aqueux qui contient au moins autant de sucre et autant d'ions calcium que la phase liquide des fruits et on les stocke sous cette forme, pendant au moins deux jours, à des températures supérieures au point de congélation du système aqueux et inférieures à 10°C.

2. Procédé selon la revendication 1, **caractérisé en ce que** la durée du stockage est de 4 à 14 jours.

3. Procédé selon la revendication 1 et/ou 2, **caractérisé en ce qu'**on effectue le stockage à une température de 2 à 6°C.

4. Procédé selon au moins l'une des revendications 1 à 3, **caractérisé en ce que** les ions calcium sont introduits dans le système aqueux sous la forme de sels de calcium d'acides de fruits.

5. Procédé selon la revendication 4, **caractérisé en ce qu'**on utilise, comme acide de fruits, de l'acide citrique, de l'acide ascorbique, de l'acide tartrique, de l'acide malique ou des mélanges de ceux-ci.

6. Procédé selon au moins l'une des revendications 1 à 4, **caractérisé en ce que** le système aqueux contient des ions calcium à une concentration allant jusqu'à 0,15 mole/l.

7. Procédé selon au moins l'une des revendications 1 à 6, **caractérisé en ce qu'**on utilise, comme sucre, du glucose, du fructose, du saccharose ou des mélanges de ceux-ci.

8. Procédé selon au moins l'une des revendications 1 à 7, **caractérisé en ce que** les fruits et le système aqueux forment une suspension.

9. Procédé selon la revendication 8, **caractérisé en ce que** la densité du système aqueux est égale ou inférieure à la densité des fruits.

10. Procédé selon au moins l'une des revendications 1 à 9, **caractérisé en ce qu'**on ajoute au système aqueux, en outre, des agents de conservation, des anti-oxydants, des acides de fruits, des dérivés de l'acide hydroxycinnamique, des extraits de plantes contenant des dérivés de l'acide hydroxycinnamique, des préparations à base de peroxydase, des extraits de plantes contenant de la peroxydase, des substrats de peroxydase, de la pectine-estérase et/ou des extraits de plantes contenant de la pectine-estérase.

11. Procédé selon au moins l'une des revendications 1 à 10, **caractérisé en ce que** le pH du système aqueux est inférieur ou égal à 4,5.

12. Procédé selon au moins l'une des revendications 1 à 10, **caractérisé en ce que** la composition du système aqueux est modifiée pendant le stockage au froid.

13. Procédé selon au moins l'une des revendications 1 à 12, **caractérisé en ce qu'**on choisit les fruits dans l'ensemble constitué des griottes, des cerises douces, du raisin, des pèches, des pommes, des poires, des prunes, des abricots, des groseilles à maquereau, des fraises, des framboises, des groseilles à grappes et des mûres.

14. Procédé selon au moins l'une des revendications 1 à 13, **caractérisé en ce que** les fruits ou les morceaux de fruits présentent une taille de 4 à 15 mm.

15. Procédé selon au moins l'une des revendications 1 à 14, **caractérisé en ce qu'**on sépare ensuite les fruits de l'essentiel du système aqueux.

16. Procédé selon au moins l'une des revendications 1 à 14, **caractérisé en ce qu'**on chauffe ensuite les fruits dans un système aqueux, pendant 5 à 80 minutes, à 45 à 72°C.

17. Procédé selon au moins l'une des revendications 1 à 16, **caractérisé en ce que**, pendant le chauffage, le système aqueux est le même ou est un système aqueux différent du système pendant le stockage au froid.

18. Procédé selon au moins l'une des revendications 1 à 17, **caractérisé en ce qu'**on produit une pression négative dans le conteneur pour le stockage au froid et/ou pour le traitement à la chaleur.

19. Procédé selon au moins l'une des revendications 1 à 17, **caractérisé en ce qu'**on introduit un gaz inerte dans le conteneur pour le stockage au froid et/ou pour le traitement à la chaleur.

20. Utilisation des fruits croquants selon au moins l'une des revendications 1 à 12 pour la préparation de conserves de fruits, de préparations à base de fruits, de confitures ou de fruits pour garnitures.
